(19) Europäisches Patentamt

European Patent Office

Office européen des brevets

(11) **EP 0 900 771 B1**

(12) **FASCICULE DE BREVET EUROPEEN**

(45) Date de publication et mention
de la délivrance du brevet:
**08.01.2003 Bulletin 2003/02**

(51) Int Cl.⁷: **C04B 28/06**, E04H 7/18
// C04B111:23

(21) Numéro de dépôt: **98401962.0**

(22) Date de dépôt: **31.07.1998**

(54) **Mélanges cimentaires à base de clinkers sulfoalumineux et ferroalumineux et leur utilisation dans la construction d'ouvrages cimentaires au contact de solutions agressives**

Sulfoaluminate- und Eisenaluminateklinker enthaltende Zementzusammensetzungen, für Anwendung in Zementwerken die in Berührung mit aggressiven Lösungen kommen

Cementitious mixures based on sulfoaluminous and ferroaluminous clinkers, and their use in the construction of cementitious structures in contact with aggressive solutions

(84) Etats contractants désignés:
**BE ES FR GR IT**

(30) Priorité: **04.09.1997 FR 9710991**

(43) Date de publication de la demande:
**10.03.1999 Bulletin 1999/10**

(73) Titulaire: **CIMENTS FRANCAIS
F-92800 Puteaux (FR)**

(72) Inventeurs:
• **Colombet, Pierre
78980 Longnes (FR)**
• **Le Rolland, Bruno
78200 Mantes la Jolie (FR)**
• **Noworyta, Gilbert
78930 Breuil Bois Robert (FR)**

(74) Mandataire: **Loyer, Bertrand
Cabinet Loyer,
78, avenue Raymond Poincaré
75116 Paris (FR)**

(56) Documents cités:
• **CHEMICAL ABSTRACTS, vol. 116, no. 4, 27 janvier 1992 Columbus, Ohio, US; abstract no. 26816j, WANG,HUI ET AL: "High-strength cement mortar" XP000285379 & CN 1 052 472 A (FAMING ZHUANLI SHENQING GONGKAI SHUOMINGSHU) 16 décembre 1989**
• **CHEMICAL ABSTRACTS, vol. 128, no. 5, 2 février 1998 Columbus, Ohio, US; abstract no. 52110, J.BERETKA ET AL.: "Effect of composition on the hydration properties of rapid-hardening sulfoaluminate cements" XP002066832 & PROCEEDINGS OF THE 10TH INTERN. CONGRESS ON THE CHEMISTRY OF CEMENT, ED. H.JUSTNES, vol. 2, - 1997 pages 2ii029-8, AMARKAI AB, GOETEBORG, SWEDEN**
• **DATABASE WPI Section Ch, Week 9327 Derwent Publications Ltd., London, GB; Class H01, AN 93-218933 XP002066833 & SU 1 749 199 A (BELGOROD CONSTR MATERIALS TECHN INST)**

**Description**

La présente invention concerne l'utilisation de mélanges cimentaires résistant à des solutions agressives dans la construction d'ouvrages cimentaires au contact de solutions agressives, en particulier celles renfermant des acides organiques.

Un liant cimentaire (appelé plus communément ciment) est un matériau solide à l'état sec qui, lorsqu'il est mélangé avec de l'eau (éventuellement en présence d'additifs cimentaires et/ou de granulats inertes, fins comme le sable, ou bruts comme les pierres concassées ou le gravier, classés dans la réglementation ASTM N° C 33) fournit un mélange plastique capable de faire prise et de durcir au cours du temps. Ce mélanges sont décrits dans la présente invention sous le nom de "mélanges cimentaires" ou "compositions cimentaires".

Les "mélanges cimentaires" contiennent donc soit les "pâtes", mélanges de liant cimentaire (ciment) et d'eau, sans granulats, soit les mortiers, c'est-à-dire des mélanges à base d'eau, de liant cimentaire et de granulats fins, soit les bétons, c'est-à-dire des mélanges d'eau, de liant cimentaire et de granulats fins et grossiers.

La quantité d'eau employée pour préparer les mélanges cimentaires est suffisante pour compléter la réaction d'hydratation du ciment et pour fournir l'ouvrabilité optimale à l'état plastique du mélange. On entend par ouvrages cimentaires les ouvrages réalisés avec les mélanges cimentaires, par exemple les ouvrages architecturaux, les ouvrages occasionnant des travaux de maçonnerie, les ouvrages routiers, les ouvrages hydrauliques, etc...

Les liants cimentaires les plus connus et les plus largement employés actuellement sont le ciment Portland et les ciments alumineux à base d'aluminates de calcium (ciments classiques).

Les clinkers sulfoalumineux et ferroalumineux sont des liants cimentaires spéciaux connus pour leurs propriétés de durcissement rapide, pour leur résistance mécanique élevée à très court terme, pour leur imperméabilité élevée, ainsi que pour leur grande résistance au froid et à la corrosion par des composés minéraux en solution aqueuse comme les chlorures, les sulfates et donc par l'eau de mer. Ces propriétés, supérieures à celles des ciments Portland et des ciments alumineux à base d'aluminates de calcium sont mises à profit dans des applications particulières, par exemple dans le secteur de l'architecture marine ou côtière ainsi que dans de nombreux autres secteurs dans lesquels la rapidité de réalisation et de mise en service est facteur primordial ("The Third Cement Series in China, World Cement, August 1994, pp. 6-10).

Dans le cas des ouvrages cimentaires rencontrés dans l'architecture agricole (par exemple les silos, les rigoles pour l'écoulement des déjections animales, les éléments pour le renforcement des terrains et des talus qui sont au contact d'eaux résiduelles résultant de traitements agricoles) se pose le problème de leur dégradation. En effet, on a constaté que ces ouvrages qui sont au contact répété de différents types de liquides organiques issus des activités d'élevage ou d'agriculture, donc soumis à des conditions d'agressivité extrêmes, subissent notamment des déformations (expansions), et se désagrègent rapidement dans le cas où ils sont constitués de ciments classiques.

Pour pallier ces inconvénients majeurs dans le domaine de l'architecture agricole, la présente invention a pour objet de proposer des mélanges cimentaires pourvus de meilleure qualité de résistance aux solutions "agricoles", à base de liquides organiques, que les ciments généralement employés.

On a remarqué que les solutions "agricoles" sont extrêmement agressives, notamment beaucoup plus agressives que les solutions contenant majoritairement des sulfates ou des chlorures.

Elles dérivent en effet d'activités variées, et renferment des matériaux organiques très divers, dissous ou en suspension, tels que des micro-organismes, des déjections animales, des produits de la décomposition de fragments végétaux (comme la paille par exemple), de l'acide urique, de l'ammoniaque, de la potasse, des détergents, des produits antiparasitaires etc... En fait, ce mélange très complexe renferme comme composants majoritaires, des acides organiques.

Un but de la présente invention est donc de proposer un mélange cimentaire résistant aux acides organiques, et plus particulièrement qui présente une moindre déformation et une moindre désagrégation que les ciments classiques.

Un autre but de l'invention est de permettre l'utilisation d'un tel mélange cimentaire dans des ouvrages cimentaires exposés au contact de solutions renfermant des acides organiques, telles que les solutions "agricoles", qui peuvent être par exemple:

- des solutions d'ensilage, déchets liquides issus de la fermentation des céréales, du foin et autres matériaux végétaux conservés dans les silos,

- des déjections animales ou lisier,

- des eaux résiduelles (vertes/blanches) provenant du lavage des exploitations agricoles et de l'application de produits antiparasitaires.

**EP 0 900 771 B1**

On a trouvé de façon surprenante, que les mélanges cimentaires à base de clinker sulfoalumineux et/ou ferroalumineux étaient résistants aux acides organiques, notamment à ceux présents dans les solutions dérivant des activités agricoles. Ces mélanges cimentaires sont en particulier dotés d'une résistance élevée à la corrosion et d'une bonne durabilité au contact des solutions extrêmement agressives comme les solutions "agricoles". Cette résistance à l'agression par ces solutions agricoles est de façon surprenante supérieure à celle observée avec les ciments classiques (ciment alumineux ou ciment Portland).

Ce résultat est en effet particulièrement surprenant si l'on considère que la résistance à la corrosion et la durabilité sont imprévisibles lorsque l'on change de solution agressive, et par rapport au fait que, dans les solutions ayant une acidité semblable aux solutions agricoles (de pH environ égal à 5), mais contenant des acides inorganiques, les mélanges cimentaires à base de clinkers sulfoalumineux et ferroalumineux présentent des valeurs de perte de poids (désagrégation) et d'expansion (déformation) assez proches de celles obtenues avec les ciments classiques comme le ciment Portland ou le ciment alumineux.

La présente invention concerne donc l'utilisation d'un mélange cimentaire, résistant aux acides organiques, comprenant un clinker sulfoalumineux, un clinker ferroalumineux ou un mélange de ces derniers, exposé au contact d'acides organiques.

Les clinkers sulfoalumineux et ferroalumineux sont des liants cimentaires obtenus par cuisson à une température variant entre 1200° C et 1350° C ("clinkérisation") de mélanges contenant au moins une source de chaux (par exemple les calcaires qui ont une teneur en CaO variant entre 50 et 60 %), au moins une source d'alumine (bauxite ordinaire ou bauxite rouge), et au moins une source de sulfate (gypse, hémihydrate de calcium, plâtre, anhydrite naturelle ou cendres sulfocalciques).

Les clinkers sulfoalumineux typiques ont la composition chimique suivante:

$Al_2O_3$ (28%-40%); $SiO_2$ (3%-10%); CaO (36%-43%); $Fe_2O_3$ (1%-3%); $SO_3$ (8%-15%)

correspondant à la composition minéralogique ;

$C_4A_3\bar{S}$ (55%-75%); $C_2S$ (15%-30%); $C_4AF$ (3%-6%)

Les clinkers ferroalumineux diffèrent essentiellement par leur teneur en $Fe_2O_3$ et ont typiquement la composition chimique suivante :

$Al_2O_3$ (25%-30%); $SiO_2$ (6%-12%); CaO (43%-36%); $Fe_2O_3$ (5%-12%); $SO_3$ (5%-10%)

qui correspond à la composition minéralogique:

$C_4A_3\bar{S}$ (35%-55%); $C_2S$ (15%-35%); $C_4AF$ (15%-30%)

Dans le présent texte sont utilisées les abréviations suivantes :

$C_2S = 2CaO\text{-}SiO_2$; $C_4AF = 4CaO\text{-}Al_2O_3\text{-}Fe_2O_3$; $C_4A_3\bar{S} = 4CaO\text{-}3Al_2O_3\text{-}SO_3$

Les clinkers sulfoalumineux et/ou ferroalumineux selon l'invention peuvent également comprendre une source additionnelle de sulfates, ajoutée de préférence au moment du broyage des clinkers. Ils peuvent ainsi avantageusement être cobroyés avec de l'anhydrite, du gypse, du plâtre ou du sulfate de calcium hémihydrate.

Les mélanges cimentaires utilisés sont de préférence des mortiers ou des bétons.

La préparation du mélange cimentaire comprend le malaxage du (des) clinker(s) éventuellement additionné(s) d'une source de sulfates avec de l'eau et un ou plusieurs granulats inertes.

L'invention concerne donc notamment l'utilisation d'un tel mélange cimentaire pour la construction d'ouvrages cimentaires au contact de solutions contenant des acides organiques, telles que les solutions agricoles susmentionnées, notamment pour la construction de silos, cuves de stockage, fosses à lisier, rigoles d'évacuation ou d'irrigation, ou pour la consolidation de terrains, ou autres ouvrages dans le domaine de l'architecture agricole.

Lorsque l'on dit " au contact de solutions ", on se réfère non seulement aux utilisations pour lesquelles il y a une exposition continue de l'ouvrage cimentaire à la solution agressive, mais aussi à celles pour lesquelles peut exister une probable exposition, comme dans le cas des ouvrages cimentaires pour la consolidation des terrains qui peuvent être au contact de solutions agricoles.

Dans la présente invention, les " solutions agricoles " sont des déchets liquides qui dérivent d'utilisations agricoles variées et qui contiennent des matériaux organiques dissous ou en suspension tels que des micro-organismes, des déjections animales ou résultant de la décomposition de fragments végétaux (comme par exemple la paille). Les acides organiques sont en particulier, des acides carboxyliques en $C_2$ à $C_{12}$, tels que l'acide formique, l'acide acétique, l'acide butyrique, l'acide valérique, l'acide lactique, ou leurs mélanges, en particulier le mélange d'acide lactique et d'acide acétique.

Les solutions agricoles contiennent typiquement un ou plusieurs des acides organiques susmentionnés, et de plus, un ou plusieurs constituants, tels que l'acide urique, des substances alcalines comme l'ammoniaque et/ou la potasse, des détergents et de plus, des micro-organismes, en particulier des bactéries.

Le pH des solutions aqueuses contenant les acides organiques peut varier entre 4 et 8, selon leur composition. Les solutions agricoles typiques ont un pH compris entre 4 et 5.

Des exemples de solutions agricoles typiques sont donnés ci-après:

- les solutions d'ensilage sont des déchets liquides qui se forment typiquement, suite à la fermentation des céréales, du foin et d'autres matériaux végétaux conservés dans les silos. Elles contiennent en général un mélange d'acides acétique, lactique, butyrique, formique, et des bactéries. Elles ont un pH de l'ordre de 4 ou 5 et sont fortement agressives,

- les déjections animales contiennent typiquement un mélange d'acide acétique, propionique, valérique, phosphorique, urique, et de plus des nitrates, de l'ammoniaque, de la potasse et des bactéries. Elles ont un pH variable, généralement alcalin (de l'ordre de 8), et sont moyennement agressives,

- les eaux résiduelles (vertes/blanches) provenant du lavage des exploitations agricoles et renfermant en outre par exemple des produits antiparasitaires. Elles contiennent typiquement de l'acide acétique, lactique, propionique, valérique, phosphorique, urique, et, de plus, des détergents, de l'ammoniaque, de la potasse et des bactéries. Elles ont un pH très variable.

Elles présentent toutes comme point commun de renfermer des acides organiques carboxyliques qui sont en grande partie responsables de la dégradation des ouvrages cimentaires classiques, comme ceci va être démontré ci-après dans les exemples, dans lesquels on compare la durabilité (résistance) de différents échantillons de mélanges cimentaires sous forme de mortiers.

Les résultats obtenus sont également illustrés dans les figures 1, 2 et 3 : :

- la figure 1 est une courbe présentant la distribution des tailles de pores dans les échantillons de mortier durcis,

- la figure 2 présente l'indice de durabilité globale des échantillons placés au contact d'une solution agricole de pH=5,

- la figure 3 présente l'indice de durabilité globale des échantillons placés au contact d'une solution contenant des déjections animales.

EXEMPLES:

Des éprouvettes de mortier de dimensions (1x1x4)cm$^3$ sont préparées, en malaxant le clinker (ou ciment) avec de l'eau et du sable de granulométrie 0.1-630 microns, en utilisant un rapport pondéral eau/clinker (ou ciment) égal à 0,5 et sable/clinker (ou ciment) égal à 1. La procédure de gâchage des éprouvettes (introduction des constituants et temps de malaxage) est identique à celle décrite dans la norme NF EN 196.1

Le mélange cimentaire ainsi obtenu est introduit dans un moule spécial constitué de 4 compartiments. Le moule est ensuite placé dans une armoire humide (90% d'humidité relative, 20° C). Après 24 heures, les éprouvettes sont démoulées puis conservées pendant 28 jours dans l'eau à 20° C.

Au bout de 28 jours, les éprouvettes sont retirées de l'eau, séchées à l'aide de papier absorbant avant d'être immergées dans la solution agressive étudiée. Le temps zéro de l'essai correspond au temps de sortie de l'eau des éprouvettes après ce séjour de 28 jours. C'est à ce moment que sont effectuées les mesures des valeurs initiales des paramètres à suivre au cours du temps.

*Mortiers testés* :

- échantillons 1) : mortier obtenu à partir d'un clinker ferroalumineux additionné d'anhydrite au moment du broyage du clinker (à raison de 18 % en masse par rapport à la masse totale du mélange à sec),

- échantillon 2) : mortier obtenu à partir d'un clinker ferroalumineux non additionné d'anhydrite,

- échantillon A) : mortier obtenu à partir d'un ciment alumineux,

- échantillon B) : mortier obtenu à partir d'un ciment Portland (CEM 152,5).

*Essais de durabilité* :

Les éprouvettes constituées par les mélange cimentaires ainsi obtenus sont immergées dans la solution agressive à tester, elle-même contenue dans un récipient cylindrique de 1 litre muni d'un couvercle vissant assurant l'étanchéité. Un treillis en plastique est placé au fond de ces récipients à 1 cm du fond de façon à y déposer les éprouvettes à tester. La solution agressive, en quantité égale à 20 fois le volume de l'éprouvette, est maintenue sous agitation pendant la durée de l'essai et renouvelée tous les 15 jours. Aux échéances préalablement fixées, les éprouvettes sont prélevées de la solution agressive pour effectuer les mesures suivantes:

a) Variation de poids :

les éprouvettes de mortier sont prélevées, séchées à l'aide d'un papier absorbant, puis pesées. La variation de poids est exprimée en pour cent par rapport au poids initial.

b) Variation d'expansion longitudinale :

la mesure consiste à déterminer la longueur de l'éprouvette à l'aide d'un comparateur capable d'apprécier des variations dimensionnelles aussi faibles que 2 µm.

c) Variation du volume de corrosion:

le volume corrodé est déterminé sur l'éprouvette prélevée en mesurant l'épaisseur de la couche corrodée.
Le paramètre « corrosion» sera par la suite exprimé en temps de séjour (en jours) nécessaire à la corrosion totale de l'échantillon, c'est-à-dire jusqu'au coeur de l'éprouvette.

d) Porosité totale et distribution des tailles de pores :

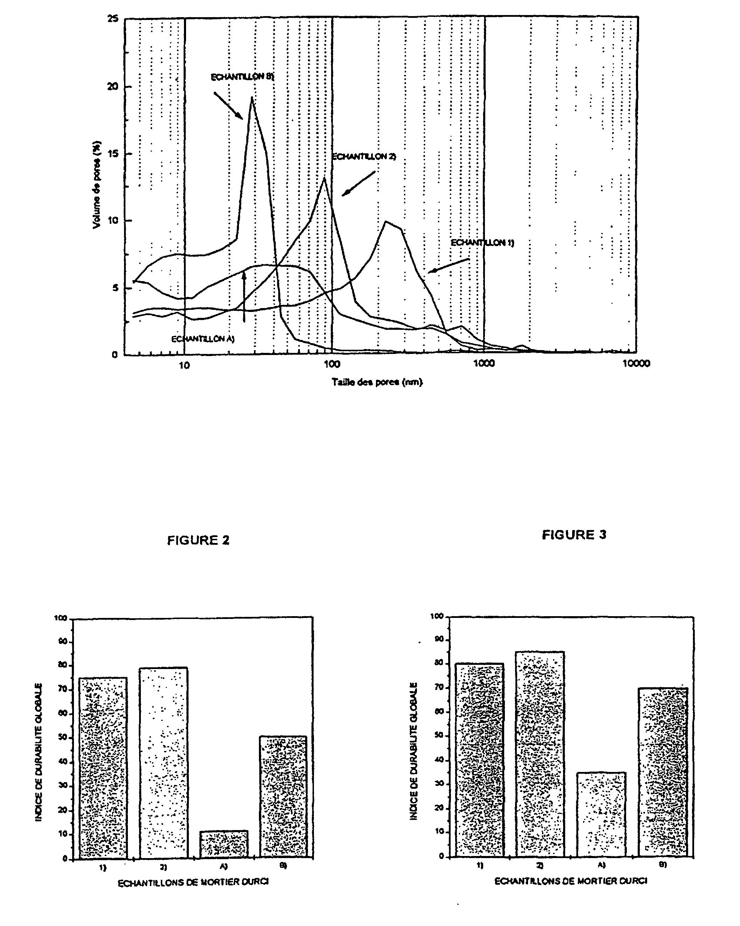

Ces mesures sont effectuées classiquement au porosimètre à mercure sur les éprouvettes de mortiers durcis (voir tableau 1 et figure 1).

Tableau 1 -

| Mesure de la porosité totale d'éprouvettes de mortier | |
|---|---|
| MORTIER | POROSITE TOTALE (% ) |
| Clinker ferroalumineux (Echantillon 1) | 19,3 |
| Clinker ferroalumineux (Echantillon 2) | 19,9 |
| Ciment alumineux (Echantillon A) | 16,0 |
| Ciment Portland (Echantillon B) | 15,5 |

De façon surprenante, il a été trouvé que, malgré une porosité totale plus élevée (tableau 1) et une quantité de pores de grand diamètre bien plus élevée (voir figure 1), les mortiers à base de clinkers sulfoalumineux ou ferroalumineux présentent un indice de durabilité global (voir définition ci-dessous) supérieur aux ciments classiques comme le ciment Portland ou le ciment alumineux.

Exemple 1

*Détermination de la durabilité dans une solution agricole simulée de pH=5*

La grande variabilité des solutions agricoles réelles nous a conduit à utiliser une solution agricole simulée constituée par un mélange d'acides organiques reproduisant un jus de fermentation de maïs. La seule différence avec ce jus est l'absence d'acide butyrique qui génère une trop mauvaise odeur.
La solution agressive suivante, qui reproduit les caractéristiques d'un jus de fermentation de maïs a ainsi été utilisée:

- solution agricole simulée contenant 4,25 % en volume d'acide lactique, 1,25 % en volume d'acide acétique, dans l'eau, amenée à pH=5 par l'ajout de NaOH en pastilles.

La perte de poids et la variation d'expansion ont été déterminées après 100 jours d'immersion dans la solution agricole simulée choisie. La mesure de la corrosion correspond aux nombres de jours nécessaires à la corrosion complète de l'éprouvette.

# EP 0 900 771 B1

Dans le tableau 2 sont indiqués les résultats obtenus pour les échantillons 1), 2), A) et B).

TABLEAU 2.

| Essais de durabilité dans la solution agricole simulée de pH=5. | | | | |
|---|---|---|---|---|
| | échantillon 1) | échantillon 2) | échantillon A) | échantillon B) |
| Perte de poids | -60 % | - 38 % | - 100 % | - 30 % |
| Expansion | + 0,14 % | + 0,26 % | DETRUITE | - 0,80 % |
| Corrosion | 170 jours | 175 jours | 50 jours | 90 jours |

Résultats :

a) Perte de poids

Les éprouvettes de mortier obtenu avec le ciment alumineux (échantillon A) ne présentent aucune résistance dans la solution agricole, et sont complètement détruites au bout de 50 jours d'immersion dans cette solution. Le mortier 2), non additionné d'anhydrite, présente une perte de poids inférieure à celle du mortier 1) additionné d'anhydrite. La valeur obtenue avec l'échantillon B) est assez similaire à celle obtenue avec l'échantillon non additionné d'anhydrite.

b) Variation d'expansion longitudinale

Les mortiers préparés à partir de ciments ferroalumineux gonflent légèrement. L'état de l'échantillon contenant le ciment alumineux est tellement dégradé que la mesure n'a pas pu être effectuée à l'échéance de 30 jours. Quant à l'échantillon B), il présente plutôt du « retrait » dont la valeur, loin d'être négligeable (-0,80 %), est préjudiciable à la durabilité.

c) Variation de volume de corrosion

Les mortiers préparés à partir de ciments ferroalumineux présentent des caractéristiques nettement meilleures que celles obtenues avec le ciment alumineux ou le ciment Portland. L'échantillon 2), exempt d'anhydrite, présente des caractéristiques meilleures que l'échantillon préparé avec ajout d'anhydrite.

Indice de durabilité globale dans la solution agricole simulée de pH=5

3 indices de durabilité relatifs aux 3 paramètres ci-dessus (expansion, perte de poids, volume de corrosion) sont calculés, selon le critère indiqué dans le tableau 3.

Tableau 3 -

| Principe de calcul des indices de durabilité dans la solution agricole simulée de pH=5 | | | | |
|---|---|---|---|---|
| Mesure | Durée de l'essai | Indice = 100 | Indice = 0 | Indice |
| Perte de poids | 100 j | perte nulle | perte = 100% | X1 |
| Expansion | 100 j | expansion nulle | expansion= 1% | X2 |
| Corrosion | à 100 % | durée >150 j(*) | corrosion immédiate | X3 |
| Indice = indice de durabilité  j = jours | | | | |

(*) : temps nécessaire pour atteindre une corrosion de 100 %.

Sur la base de valeurs de chaque indice de durabilité X1, X2, et X3, calculés comme ci-dessus indiqué pour chaque paramètre d'intérêt (poids, expansion et corrosion), l'indice de durabilité globale I est déterminé en effectuant la moyenne arithmétique:

$$I=(X1 + X2 + X3)/3$$

Les indices de durabilité globale obtenus dans la solution agricole sont rassemblés dans le tableau 4.

TABLEAU 4 -

| Indices de durabilité dans la solution agricole simulée de pH=5 | | | |
|---|---|---|---|
| Echantillon | X1 (Poids) | X2 (Expansion) | X3 (Corrosion) | I |
| 1) | 40 | 86 | 100 | 75 |
| 2) | 62 | 74 | 100 | 79 |
| A) | 0 | 0 | 33 | 11 |
| B) | 70 | 20 | 60 | 50 |
| I : indice de durabilité globale | | | |

Les indices de durabilité globale dans la solution agricole simulée du tableau 4 sont de plus représentés sous forme d'histogrammes sur la figure 2.

Exemple 2

*Détermination de la durabilité dans une solution de simulation d'un liquide contenant des déjections animales* :

La solution agressive suivante a été utilisée:

- solution aqueuse contenant un mélange d'acide acétique, propionique, valérique, urique, et de plus des nitrates et des sulfates d'ammonium, d'acide urique, d'ammoniaque, de potasse, dont le pH a été ajusté à 7.

Les échantillons de mortier à base de clinkers ferroalumineux 1), 2) et les échantillons de mortier de comparaison A) et B) ont été soumis aux essais de perte en poids, de variation d'expansion et du volume de corrosion comme ci-dessus indiqué pour la solution agricole de pH=5, et les paramètres à évaluer ont été déterminés après 100 jours d'immersion dans la solution agressive.

Les indices de durabilité globale ont été calculés comme indiqué ci-dessus pour la solution agricole *simulée* de pH=5.

Les résultats obtenus sont représentés sur les histogrammes de la figure 3, d'où il résulte que les échantillons de mortier obtenus à partir des clinkers ferroalumineux possèdent des caractéristiques de durabilité supérieures aux mortiers de comparaison A) et B).

Exemple 3

*Comparaison de durabilité entre les solutions agricoles, les solutions de nitrate d'ammonium, et les solutions de sulfate de magnésium* :

Les résultats obtenus dans la solution agricole simulée de pH=5 ont été comparés avec ceux déjà obtenus dans le nitrate d'ammonium et le sulfate de magnésium :

- solution aqueuse de nitrate d'ammonium (3,7 g/litre),

- solution aqueuse de sulfate de magnésium (26 g/litre).

La perte de poids et la variation d'expansion ont été déterminées après 200 jours d'immersion contrairement à la solution agricole simulée pour laquelle les mesures ont été effectuées au bout de 100 jours. La raison de ce choix réside dans l'agressivité beaucoup plus élevée des solutions agricoles.

Les résultats obtenus sont indiqués dans le tableau 5.

TABLEAU 5 -

| | | échantillon 1) | échantillon 2) | échantillon A) | échantillon B) |
|---|---|---|---|---|---|
| | Essais de durabilité dans le sulfate de magnésium, dans le nitrate d'ammonium et dans la solution agricole simulée de pH=5. |
| S.M. | Variation de poids | + 0,57 % | + 1,26 % | - 2,00 % | +9,24 % |
| S.M. | Expansion | + 0,03 % | + 0,05 % | + 0,01 % | > 2 % |
| S.M. | Indice de durabilité globale (*) | 98 | 97 | 98 | 45 |
| N.A. | Variation de poids | - 8,00 % | - 6,10 % | - 6,20 % | -11,32 % |
| N.A. | Expansion | + 0,02 % | + 0,08 % | + 0,04 % | + 0,06 % |
| N.A. | Indice de durabilité globale (*) | 95 | 93 | 95 | 91 |
| S.A. | Variation de poids | - 60 % | - 38 % | - 100 % | - 30 % |
| S.A. | Expansion | + 0,14 % | + 0,26 % | DETRUITE | - 0,80 % |
| S.A. | Corrosion | 170 j | 175 j | 50 j | 90 j |
| S.A. | Indice de durabilité globale | 75 | 79 | 11 | 50 |

S.M. = solution de sulfate de magnésium
N.A. = solution de nitrate d'ammonium
S.A. = solution agricole simulée de pH = 5
(*): Dans le cas de S.M. et de N.A., l'indice de durabilité est calculé sur la base des valeurs de la variation de poids et d'expansion.

Résultats :

Perte de poids:

Dans la solution de sulfate de magnésium, les mortiers contenant les clinkers ferroalumineux ne perdent pas de poids. Par contre, on enregistre une perte de poids de 2 % pour l'échantillon de ciment alumineux (A) *alors que l'échantillon à base de ciment Portland (B)* présente *un gain de poids très important.*

Dans la solution de nitrate d'ammonium, tous les échantillons montrent une perte de poids, qui est comparable pour les mortiers à base de ciment alumineux et ceux à base de clinker ferroalumineux non additionné d'anhydrite, et est légèrement plus importante pour le mortier 1) à base de clinker ferroalumineux additionné d'anhydrite. La perte de poids est environ deux fois plus importante pour l'échantillon à base de ciment Portland entraînant ainsi un indice de durabilité légèrement plus faible.

La solution agricole se révèle être beaucoup plus agressive que les deux autres solutions testées (d'autant plus que les mesures sont effectuées au bout de 100 jours d'immersion comparativement à 200 jours pour le sulfate de magnésium et le nitrate d'ammonium), en particulier par rapport à celle de nitrate d'ammonium qui a, elle aussi, un pH faiblement acide.

Variation d'expansion longitudinale :

Dans la solution de sulfate de magnésium et de nitrate d'ammonium, les valeurs d'expansion longitudinale sont négligeables, sans différences significatives entre les échantillons testés. Dans les deux solutions, le mortier à base de clinker ferroalumineux 2) exempt d'anhydrite présente un gonflement légèrement supérieur à celui des autres échantillons testés.

Dans la solution agricole, les valeurs d'expansion longitudinale obtenues avec les mortiers contenant les clinkers ferroalumineux sont satisfaisantes. Ceux-ci ont un comportement nettement différent de celui du mortier contenant du ciment alumineux, qui est détruit à la fin de l'essai et de celui à base de ciment Portland.

Indices de durabilité globale :

Les valeurs indiquées dans le tableau 5 illustrent clairement la supériorité des échantillons 1) et 2) vis-à-vis de la corrosion en milieu agricole simulé.

Les exemples ci-dessus, donnés à titre illustratif et non limitatif, ont montré que les solutions agricoles sont extrêmement agressives pour les ciments classiques, et que leur contact avec les ouvrages cimentaires provoque avec le temps, parfois rapidement, une dissolution des constituants solides, une perte de poids, une variation dimensionnelle et une désagrégation inéluctable.

Les clinkers sulfoalumineux et/ou ferroalumineux peuvent donc constituer le matériau de base pour des mélanges cimentaires destinés notamment à des ouvrages dans le domaine de l'architecture agricole que sont les silos.

Les cuves pour l'évacuation et/ou le compostage des déchets organiques, les fosses à lisier, les rigoles d'écoulement pour les déjections animales, les rigoles pour l'irrigation, ou encore les ouvrages pour la consolidation des terrains (par exemple pour le renforcement de talus avoisinant les exploitations agricoles, qui peuvent donc être au contact de ces « solutions agricoles ».

Ils peuvent servir à la fois à la construction de ces ouvrages, ou à la réparation ou restauration de ces derniers.

**Revendications**

1. Utilisation d'un mélange cimentaire, résistant aux acides organiques, comprenant un clinker sulfoalumineux, un clinker ferroalumineux ou un mélange de ces derniers pour la construction d'ouvrage cimentaire exposé au contact desdits acides organiques.

2. Utilisation selon la revendication 1, **caractérisée en ce que** le mélange cimentaire comprend en outre une source additionnelle de sulfates, de préférence ajoutée au moment du broyage du clinker.

3. Utilisation selon la revendication 2, **caractérisée en ce que** la source additionnelle de sulfates est choisie parmi l'anhydrite, le gypse, le plâtre ou le sulfate de calcium hémihydrate.

4. Utilisation selon l'une quelconque des revendications précédentes, **caractérisée en ce que** ce mélange est un mortier ou un béton.

5. Utilisation selon l'une quelconque des revendications précédentes, au contact d'une solution agricole, déchet liquide issu d'activités agricoles.

6. Utilisation selon la revendication 5, **caractérisée en ce que** la solution agricole contient en outre des fragments végétaux et/ou des déchets liquides résultant de leur fermentation, des micro-organismes, des déjections animales, ou leurs mélanges, ainsi que des produits de leur décomposition.

7. Utilisation selon les revendications 5 ou 6, **caractérisée en ce que** la solution présente un pH compris entre 4 et 8 environ.

8. Utilisation selon l'une quelconque des revendications précédentes, au contact d'un ou plusieurs acides parmi l'acide formique, l'acide acétique, l'acide propionique, l'acide butyrique, l'acide valérique et l'acide lactique.

9. Utilisation selon la revendication 7, au contact d'acide acétique et d'acide lactique.

10. Utilisation du mélange cimentaire selon l'une quelconque des revendications précédentes, pour la construction d'ouvrages dans le secteur de l'architecture agricole, notamment pour la construction de silos, cuves de stockage, rigoles d'évacuation ou d'irrigation, ou pour la consolidation de terrains.

**Patentansprüche**

1. Verwendung einer gegen organische Säuren beständigen Zementmischung, die einen sulfoalaunhaltigen Klinker, einen ferroalaunhaltigen Klinker oder eine Mischung dieser letzteren umfaßt, zum Bau von Zementgebäuden, die dem Kontakt mit diesen organischen Säuren ausgesetzt sind.

2. Verwendung nach Anspruch 1, **dadurch gekennzeichnet, daß** die Zementmischung ferner eine zusätzliche Sulfatquelle umfaßt, die vorzugsweise zum Zeitpunkt des Vermahlens des Klinkers zugegeben wird.

3. Verwendung nach Anspruch 2, **dadurch gekennzeichnet, daß** die zusätzliche Sulfatquelle ausgewählt ist unter Anhydrit, Gips, gebranntem Gips oder dem Sulfat von Calciumhemihydrat.

4.  Verwendung nach einem der vorhergehenden Ansprüche, **dadurch gekennzeichnet, daß** diese Mischung ein Mörtel oder ein Beton ist.

5.  Verwendung nach einem der vorhergehenden Ansprüche im Kontakt mit einer Landwirtschaftslösung, d.h. flüssigem Abfall, der aus landwirtschaftlicher Tätigkeit stammt.

6.  Verwendung nach Anspruch 5, **dadurch gekennzeichnet, daß** die Landwirtschaftslösung ferner Pflanzenteile und/oder durch deren Fermentation gebildete, flüssige Abfälle, Mikroorganismen, Tierexkremente oder deren Mischungen sowie deren Abbauprodukte enthält.

7.  Verwendung nach den Ansprüchen 5 oder 6, **dadurch gekennzeichnet, daß** die Lösung einen pH-Wert im Bereich von einschließlich etwa 4 bis einschließlich etwa 8 aufweist.

8.  Verwendung nach einem der vorhergehenden Ansprüche im Kontakt mit einer oder mehreren Säuren, wie Ameisensäure, Essigsäure, Propionsäure, Buttersäure, Valeriansäure und Milchsäure.

9.  Verwendung nach Anspruch 7 im Kontakt mit Essigsäure und Milchsäure.

10. Verwendung der Zementmischung nach einem der vorhergehenden Ansprüche zum Bau von Gebäuden auf dem Gebiet des Landwirtschaftsbaus, insbesondere zum Bau von Silos, Vorratsbehältern, Ablauf- oder Bewässerungsrinnen, oder zur Geländebefestigung.

## Claims

1.  Use of a cement mixture resistant to organic acids, comprising an aluminosulphate clinker, an aluminoferrite clinker or a mixture of these, for the construction of a cement structure exposed to contact with the said organic acids.

2.  Use according to Claim 1, **characterised in that** the cement mixture moreover comprises an additional source of sulphates, preferably added at the time of grinding the clinker.

3.  Use according to Claim 2, **characterised in that** the additional source of sulphates is selected from anhydrite, gypsum, plaster or calcium sulphate hemihydrate.

4.  Use according to any one of the preceding claims, **characterised in that** this mixture is a mortar or a concrete.

5.  Use according to any one of the preceding claims in contact with an agricultural solution, a liquid waste derived from agricultural activities.

6.  Use according to Claim 5, **characterised in that** the agricultural solution moreover contains vegetable particles and/or liquid waste resulting from fermentation thereof, microorganisms, animal excrement or mixtures thereof, and decomposition products thereof.

7.  Use according to Claim 5 or 6, **characterised in that** the solution has a pH of between 4 and 8 approximately.

8.  Use according to any one of the preceding claims in contact with one or more acids from the group comprising formic acid, acetic acid, propionic acid, butyric acid, valeric acid and lactic acid.

9.  Use according to Claim 7 in contact with acetic acid and lactic acid.

10. Use of the cement mixture according to any one of the preceding claims for the construction of structures in the agricultural building sector, in particular for the construction of silos, storage tanks, drainage or irrigation channels or for consolidating the soil.

FIGURE 2

FIGURE 3